# EUROPÄISCHE PATENTANMELDUNG

(11) **EP 2 690 419 A2**
(43) Veröffentlichungstag der Anmeldung: **29.01.2014**
(21) Anmeldenummer: 13003287.3
(22) Anmeldetag: 28.06.2013
(51) Int. Cl.: G01M 1/04

(54) **Vorrichtung zum Auswuchten von Fahrzeugrädern**

(30) Priorität: 27.07.2012 DE 202012007240 U
(71) Anmelder: att Automotive Testing Technologies GmbH, 77694 Kehl-Auenheim (DE)
(72) Erfinder: Gnielka, Peter, 77731 Willstätt (DE); Hoffmann, Bernhard, 65185 Wiesbaden (DE)
(74) Vertreter: Lemcke, Brommer & Partner

(57) **Zusammenfassung**

Eine Vorrichtung zum dynamischen Auswuchten von Fahrzeugrädern mittels einer rotierenden Hohlwelle (1), auf welcher das auszuwuchtende Rad an seiner Felge (F) mittels einer Spannvorrichtung fixierbar ist, wobei die Spannvorrichtung einen axial auf der Hohlwelle (1) verschiebbaren Spannkörper (6) und ein ihn betätigendes Zylinder/Kolben-Aggregat (10) aufweist, so dass die Felge (F) zwischen dem Spannkörper (6) und einem Widerlager (3) verspannbar ist. Wesentlich dabei ist, dass das Zylinder/Kolben-Aggregat (10) doppelseitig, nämlich sowohl in Richtung des Verspannens der Felge (F), wie auch in entgegengesetzter Richtung zum Entspannen der Felge (F) wirksam ist.

## Beschreibung

Die Erfindung betrifft eine Vorrichtung zum dynamischen Auswuchten von Fahrzeugrädern mittels einer rotierenden Welle, auf welcher das auszuwuchtende Rad an seiner Felge mittels einer Spannvorrichtung fixierbar ist, wobei die Spannvorrichtung einen axial auf der Welle verschiebbaren Spannkörper und ein ihn betätigendes Zylinder/Kolben-Aggregat aufweist, so dass die Felge zwischen dem Spannkörper und einem Widerlager verspannbar ist.

Aktuell erfolgt das Verspannen der Räder zwar noch hauptsächlich mittels einer Flügelmutter, die von Hand aufgeschraubt wird, bis die Felge fest sitzt. Da dies aber zeit- und kraftaufwendig ist, sind inzwischen maschinelle Spannvorrichtungen auf dem Vormarsch, die mit Elektromotoren oder pneumatischen Zylinder/ Kolben-Aggregaten arbeiten.

Die bisher bekannten pneumatischen Spannvorrichtungen funktionieren überwiegend so, dass das Festspannen der Felge mittels einer Druckfeder erfolgt, das Lösen der Felge durch ein entgegengesetzt zur Federkraft wirksames Zylinder/Kolben-Aggregat.

Es ist aber auch der umgekehrte Wirkungsmechanismus bekannt, das heißt, dass die Verspannung der Felge durch ein Zylinder/Kolben-Aggregat erzeugt wird, wogegen das Entspannen durch eine Druckfeder erfolgt. Diese Alternative ist in der DE 34 00 506 dargestellt, von welcher der Oberbegriff des Patentanspruches 1 ausgeht.

Die vorliegende Erfindung geht von der Erkenntnis aus, dass die Anpressung durch eine Druckfeder in erheblichem Maß vom Felgentyp des auszuwuchtenden Rades beeinflusst wird: Felgen, die im Einspannbereich axial breit bauen, unterliegen einer hohen Anpressung, wogegen schmal bauende Felgen eine deutlich, geringere Anpressung erfahren. Dies gilt sinngemäß auch dann, wenn nicht die Anpressung, sondern das Lösen der Felge mittels einer Druckfeder erfolgt, weil auch hier die von der Feder erzeugte Gegenkraft und somit die entgegen der Feder wirkende Spannkraft vom Federweg abhängt.

Von dieser Erkenntnis ausgehend liegt der vorliegenden Erfindung die Aufgabe zugrunde, die bekannte Auswuchtvorrichtung hinsichtlich ihrer Spannvorrichtung dahingehend zu verbessern, dass die Stärke der Verspannung unabhängig von den Maßen der Felge ist.

Des Weiteren soll sich die Erfindung durch robusten und zuverlässigen Aufbau auszeichnen und auch nachträglich noch an herkömmlichen Wuchtmaschinen montierbar sein.

Diese Aufgabe wird erfindungsgemäß dadurch gelöst, dass der Antrieb aus einem Zylinder/Kolben-Aggregat besteht, dass doppelseitig, nämlich sowohl in Richtung des Verspannens der Felge, wie auch in entgegengesetzter Richtung zum Entspannen der Felge wirksam ist.

Auf diese Weise wird die Spannkraft nicht mehr vom Federweg einer Druckfeder beeinflusst, sondern sie ist allein vom Druck in einem Zylinder/Kolben-Aggregat abhängig und dieser Druck kann problemlos unabhängig von der Kolbenposition relativ zu seinem Zylinder konstant gehalten werden. Dadurch kann eine konstante Anpressung der Felge unabhängig von der Felgengröße garantiert werden.

Darüber hinaus hat die Erfindung den Vorteil, dass für das Lösen der Verspannung keine zusätzlichen Stellmittel notwendig sind, weil das Zylinder/KolbenAggregat in seinen beiden Axialrichtungen aktivierbar ist und somit auch zum Entspannen der Felge verwendet werden kann. Der bauliche Aufwand für die Spannvorrichtung wird dadurch erheblich reduziert.

In Weiterbildung der Erfindung empfiehlt es sich, dass das Zylinder-/KolbenAggregat über ein Axiallager auf den Spannkörper einwirkt. Dadurch kann das Zylinder/Kolben-Aggregat gehäusefest angebaut werden und braucht die Rotation des Spannkörpers nicht mitzumachen.

Damit dieses Axiallager kostengünstig gestaltet werden kann, insbesondere nur ein einziges Axiallager für die Abkopplung des Zylinder/Kolben-Aggregates von der Rotation der Spannvorrichtung ausreicht, empfiehlt es sich, dass in gespanntem Zustand ein geringer Luftspalt von ca. 0,3 mm bis etwa 1 mm, vorzugsweise etwa 0,5 mm in Axialrichtung vorgesehen wird zwischen demjenigen Lagerring des Axiallagers, der dem Zylinder/Kolben-Aggregat zugewandt ist und dem damit korrespondierenden Anschlussteil des Zylinder/Kolben-Aggregates. Dieser Luftspalt stellt sicher, dass die in gespanntem Zustand auftretende Rotation der Spannvorrichtung sich nicht auf das Zylinder/Kolben-Aggregat auswirkt, obwohl der dem ZylinderfKolben-Aggregat zugewandte Lagerring diese Rotation mitmacht.

Zu dem gleichen Zweck empfiehlt es sich, dass der dem Zylinder/KolbenAggregat abgewandte Lagerring des Axiallagers durch einen entsprechenden Luftspalt an der inneren Umfangsfläche keinen Kontakt mit der Spannvorrichtung hat, im Ergebnis also still stehen kann, auch wenn die Spannvorrichtung rotiert.

Grundsätzlich spielt es keine Rolle, ob der Zylinder oder der Kolben des Zylinder/Kolben-Aggregates auf den Spannkörper einwirkt. Im Sinne einer kompakten Bauweise empfiehlt es sich aber, den Zylinder ortsfest zu montieren und den Kolben über ein Axiallager auf den Spannkörper einwirken zu lassen.

Das Zylinder/Kolben-Aggregat wird vorzugsweise mit pneumatischem Druckmittel beaufschlagt, da Druckluft ohnehin in der Werkstatt zur Verfügung steht. Das Zylinder/Kolben-Aggregat weist dann zwei Pneumatik-Anschlüsse beidseits des Kolbens auf, damit der Kolben sowohl die Verspannung wie auch die Entspannung der Felge bewirken kann

In konstruktiver Hinsicht empfiehlt es sich schließlich noch, dass der Kolben über die Welle und/oder sie umgebende Hülsenteile auf den Spannkörper einwirkt, und zwar vorzugsweise mittels einer an sich bekannten formschlüssigen Kupplung, insbesondere über Klauen, die aus der geschlitzten Welle herausschwenkbar sind und dann mit dem Spannkörper in Eingriff gelangen. Die Zwischenschaltung einer derartigen Kupplung hat den Vorteil, dass der Druckkörper in unterschiedlichen Axialpositionen mit seiner Welle verbindbar ist und dadurch optimal an die Maße der Felge anpassbar ist. Die Maße der Felge wirken sich somit nur geringfügig auf die Hubbewegung des Zylinder/Kolben-Aggregates aus.

Weitere Merkmale und Vorteile der Erfindung ergeben sich aus der nachfolgenden Beschreibung eines Ausführungsbeispieles und aus der Zeichnung; dabei zeigt
- Figur 1: einen Axialschnitt durch die das auszuwuchtende Rad aufnehmende Welle und ihre Spannvorrichtung in entspanntem Zustand;
- Figur 2: einen Axialschnitt durch die das auszuwuchtende Rad aufnehmende Welle und ihre Spannvorrichtung mit einer Felge in gespanntem Zustand und
- Figur 3: eine Ausschnittvergrößerung der Axiallagerung

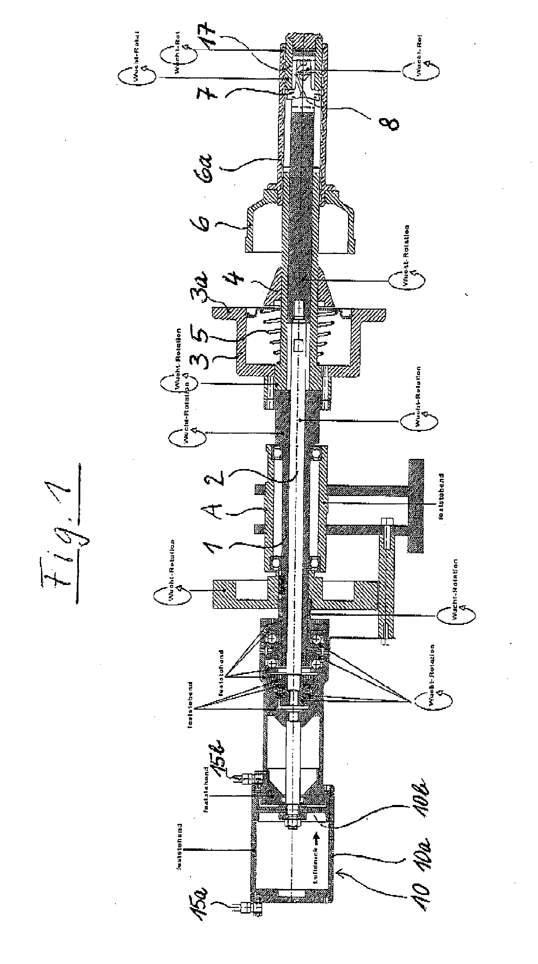

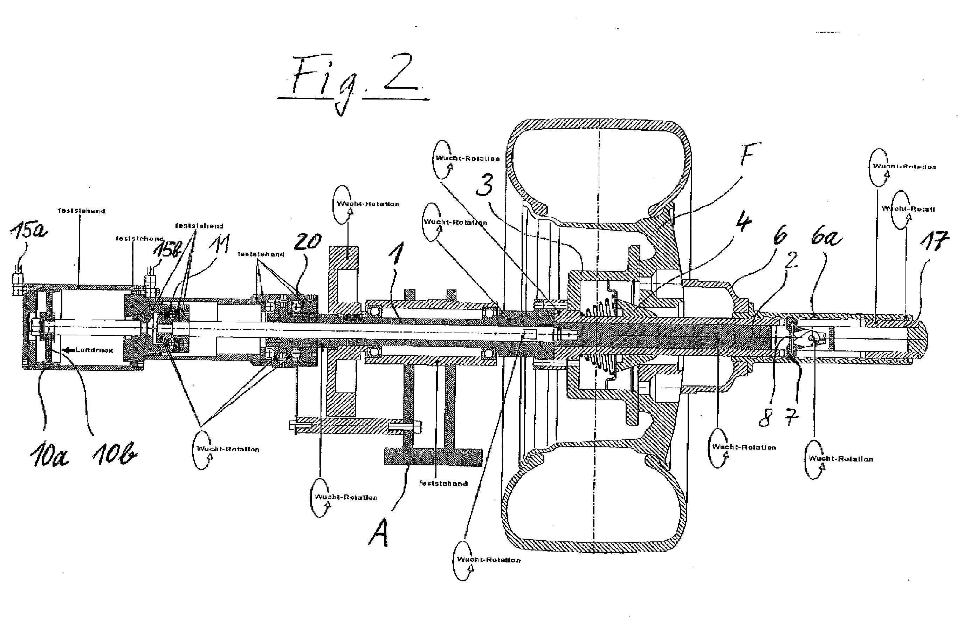

In den Figuren 1 und 2 erkennt man einen gehäusefesten Lagerbock A, der an einer nicht dargestellten, an sich bekannten Auswuchtmaschine montiert ist und in seinem Inneren über zumindest zwei Radiallager eine sich in horizontaler Richtung erstreckende Hohlwelle 1 trägt. Die Hohlwelle 1 ist drehbar, aber axial unverschiebbar gelagert. Sie kann von einem nicht dargestellten Antrieb in Rotation versetzt werden.

Mit der Hohlwelle 1 ist ein Widerlager 3 drehfest und axial unverschiebbar verbunden. Dieses Widerlager ist topfförmig ausgebildet und dient an seinem Außenflansch 3a zur Anlage einer von rechts aufschiebbaren Felge F (siehe Figur 2).

Im Inneren des topfförmigen Widerlagers 3 ist ein Konus 4 verschiebbar auf der Hohlwelle 1 gelagert. Dieser Konus ist gegen die Kraft einer Druckfeder 5 axial in das Innere des topfförmigen Widerlagers 3 hineinschiebbar, so dass er beim Andrücken einer Felge gegen den Flansch 3a des Widerlagers die Zentrierung der Felge auf der Hohlwelle 1 herbeiführt.

Des Weiteren ist auf der Hohlwelle 1 ein Spannkörper 6 gelagert. Dieser Spannkörper 6 ist nach außen von der Hohlwelle abziehbar, damit die Felge von rechts auf die Welle aufgeschoben und an das Widerlager 3 bzw. den Konus 4 angelegt werden kann.

Anschließend wird der Spannkörper 6 auf die Hohlwelle 1 aufgeschoben, bis er an der Felge anliegt.

Wie die Zeichnung weiter zeigt, weist der Spannkörper 6 eine zylindrische Verlängerung 6a auf, mit welcher er auf der Hohlwelle 1 axial verschiebbar geführt ist, Diese axiale Verlängerung 6a ist innenseitig etwa sägezahnartig profiliert und kann dadurch in Wirkverbindung gebracht werden mit zumindest zwei Spannklauen 7. Diese Spannklauen sind verschwenkbar an einer in der Hohlwelle 1 axial verschiebbaren, drehbaren Stange 2 gelagert und werden durch eine Spreizfeder 8 durch Schlitze der Hohlwelle 1 hindurch radial nach außen in Eingriff mit der Innenprofilierung der Verlängerung 6a des Spannkörpers 6 gedrückt. In dieser Stellung, die in Figur 2 gezeigt ist, fixieren sie also den Spannkörper 6 an der Hohlwelle 1.

Die Profilierung an der Innenseite der Verlängerung 6a und dazu passend die korrespondierende Kontur der Spannklauen 7 sind so geformt, dass sie wie eine Rücklaufsperre wirken, das heißt, dass der Spannkörper 6 problemlos von rechts nach links auf die Hohlwelle 1 aufgeschoben werden kann, dass er aber wegen der einrastenden Spannklauen 7 nicht mehr herausgezogen werden kann.

Sollen die Spannklauen 7 aus ihrer Verrastung mit der innenseitigen Profilierung der Verlängerung 6a gelöst werden, so wird die Stange 2 nach rechts verfahren, bis die Spannklauen 7 an einem als Anschlag 17 fungierenden Ende der Hohlwelle 1 anstoßen und dadurch radial nach innen gedrückt werden.

Insoweit ist die beschriebene Vorrichtung weitgehend bekannt.

Wesentlich ist nun der Antrieb, um einerseits den Spannkörper 6 nach links gegen die Felge F (vergl. Figur 2) und letztere gegen das Widerlager 3 zu pressen und andererseits den Spannkörper nach rechts zu verschieben, um die Felge zu lösen.

Dieser Antrieb besteht aus einem links des Lagerbockes A angeordneten Zylinder/Kolben-Aggregat 10 mit einem gehäusefesten Pneumatik-Zylinder 10a und einem darin verschiebbaren Kolben 10b. Der Kolben 10b ist mit der Stange 2 verbunden, jedoch unter Zwischenschaltung eines Axiallagers 11. Dadurch braucht der Kolben 10b die Rotation der Stange 2 nicht mitzumachen.

Das Axiallager 11 dient dazu, den Kolben 10b von der Rotation der Stange 2 zu entkoppeln. Es gewährleistet also, dass der Kolben 10b im Zylinder 10a eine reine Axialverschiebung durchführt, die Drehung der Hohlwelle 1 und der Stange 2 beim Auswuchten jedoch nicht mitmacht. Gleichzeitig soll das Axiallager aber Verschiebungen des Kolbens 10b in beiden Axialrichtungen auf die Spannvorrichtung, also auf die Stange 2 übertragen. Zu diesem Zweck ist der Kolben 10b außerhalb seines Zylinders 10a mit einem Flansch 12 verbunden, der zusammen mit einem Flanschdeckel 12a das Axiallager 11 umgibt und es In beiden Axialrichtungen übergreift, so dass der Kolben 10b das Axiallager 11 in beiden Axialrichtungen verschieben kann.

Innenseitig ist das Axiallager auf einem mit der Stange 2 fest verbundenen Ring 13 gelagert.

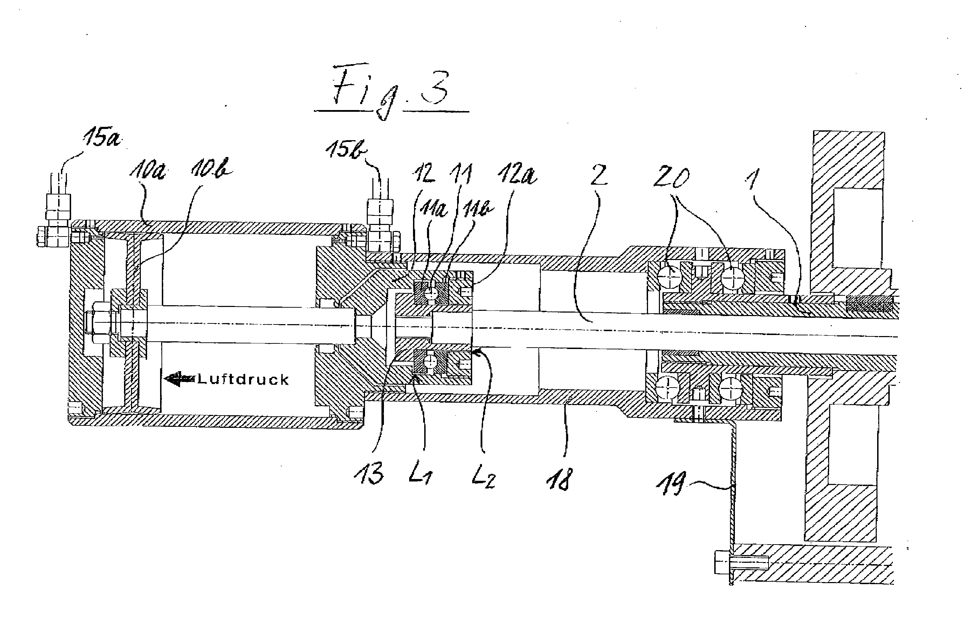

Wesentlich ist nun, dass der Flansch 12 mit seinem Flanschdeckel 12a ein leichtes Axialspiel gegenüber dem Axiallager 11 aufweist, wie dies in der vergrößerten Darstellung in Figur 3 erkennbar ist. Dieses Axialspiel wird durch einen sich radial erstreckenden Luftspalt L₁ realisiert, der zwischen demjenigen Lagerring des Axiallagers 11, der dem Zylinder/Kolben-Aggregat zugewandt ist einerseits, also dem Lagerring 11a Und dem Flansch 12 andererseits realisiert ist. Dies hat zur Folge, dass der Kolben 10b dann, wenn er die Felge fest spannen soll, nur auf den rechten Lagerring 11b des Axiallagers 11 einwirkt, jedoch keine Berührung mit dem linken Lagerring 11 aufweist. Folgerichtig ist der linke Lagerring 11a dafür vorgesehen, die Rotation der Stange 2 mitzumachen und er sitzt demgemäß an seinem radial inneren Bereich mehr oder weniger drehfest auf dem Ring 13.

Umgekehrt ist der rechte Lagerring 11b dafür vorgesehen, die Rotation der Stange 2 nicht mitzumachen und er ist demgemäß mehr oder weniger drehfest mit dem Flansch 12 verbunden.

Damit der stillstehende rechte Ring 11b des Lagers 11 nicht am Ring 13 scheuert, besteht zwischen dem inneren Umfang des rechten Lagerringes 11b einerseits und dem gegenüberliegenden Bereich des Ringes 13 andererseits ein geringer axial verlaufender Luftspalt L₂. Dieser Luftspalt befindet sich auch zwischen dem Flanschdeckel 12a und dem rotierenden Ring 13.

Der beschriebene Einbau des Lagers 11 mit 2 Luftspalten hat den Vorteil, dass für die Betätigung der Stange 2 nur ein einziges Axiallager notwendig ist. Das aus dem Luftspalt L₁ resultierende Spiel in Axialrichtung ist unkritisch, weil eine Rotation der Stange 2 nur dann eintritt, wenn die Felge F verspannt ist, wenn also die Kolbenstange 10b bestrebt ist, die Stange 2 nach links zu drücken. Dadurch ist die Existenz des Luftspaltes L₁ garantiert, wann immer die Stange 2 rotiert. Hingegen spielt es bei stillstehender Stange 2, also beim Felgenwechsel, keine Rolle, dass zwischen dem Ring 13 und dem Lager 11 ein gewisses Axialspiel vorhanden ist.

Schließlich sei noch auf die Lagerung des Zylinder/Kolben-Aggregates 10 eingegangen. Es ist mittels einer Hülse 18 und Winkelstreben 19 am nicht dargestellten Gehäuse der Wuchtmaschine montiert. Zur exakten Führung in Radlalrichtung ist die Hülse 18 außerdem über eine Lagerkombination 20 auf der drehbaren Hohlwelle 1 gelagert.

Das Zylinder/Kolben-Aggregat 10 ist doppelt wirkend ausgebildet, das heißt, dass der Zylinder 10a an seinen beiden axialen Enden einen Pressluftanschluss 15a bzw. 15b aufweist. Beide Pressluftanschlüsse sind wahlweise mit Pressluft beaufschlagbar, je nachdem, ob der Kolben 10b und damit die Stange 2 nach links im Sinne des Spannens der Felge oder nach rechts im Sinne des Entspannens bewegt werden soll.

Soll also beispielsweise die Felge eingespannt werden, so wird zunächst in an sich bekannter Weise der Spannkörper 6 von rechts so weit wie möglich an die Felge herangeschoben, wobei die Spannklauen 7 ein axiales Arretieren auf der Hohlwelle 1 sicherstellen. Danach wird der Druckluftanschluss 15b mit Druckluft beaufschlagt und der Anschluss 15a freigeschaltet, so dass die Stange 2 mit dem Spannkörper 6 nach links fährt und die Felge gegen das Widerlager 3 presst, worauf das Auswuchten in an sich bekannter Weise folgt.

Sind die erforderlichen Ausgleichsgewichte am Felgenhorn montiert, so dass keine unzulässige Unwucht mehr vorliegt, so wird der Spannkörper 3 freigegeben, indem Druckluft in den Anschluss 15a hineingepumpt und gleichzeitig der Anschluss 15b freigeschaltet wird. Der Kolben 10b fährt daraufhin nach rechts, bis die Stange 2 mit ihren Spannklauen 7 an einem Anschlag 17 anstößt. An diesem Anschlag werden die Spannklauen 7 aus ihrer radial nach außen gerichteten Position nach innen gedrückt, so dass sie außer Eingriff mit der Verlängerung 6a des Spannkörpers 6 gelangen. Darauf kann der Spannkörper 6 von der Welle 1 abgezogen werden und die Felge wird frei,

Zusammenfassend zeichnet sich die Erfindung also dadurch aus, dass die Verspannung nicht mehr durch eine Feder, deren Spannkraft von den Maßen der Felge abhängt beeinflusst wird, sondern unabhängig von den Abmessungen der Felge in gleichbleibender Stärke garantiert werden kann. Außerdem dadurch, dass man aufgrund des doppelt wirkenden Pneumatik-Zylinders keine Feder mehr für die Spannvorrichtung benötigt.

## Patentansprüche

1. Vorrichtung zum dynamischen Auswuchten von Fahrzeugrädern mittels einer rotierenden Hohlwelle (1), auf welcher das auszuwuchtende Rad an seiner Felge (F) mittels einer Spannvorrichtung fixierbar ist, wobei die Spannvorrichtung einen axial auf der Hohlwelle (1) verschiebbaren Spannkörper (6) und ein ihn betätigendes Zylinder/Kolben-Aggregat (10) aufweist, so dass die Felge (F) zwischen dem Spannkörper (6) und einem Widerlager (3) verspannbar ist,
**dadurch gekennzeichnet,**
**dass** das Zylinder/Kolben-Aggregat (10) doppelseitig, nämlich sowohl in Richtung des Verspannens der Felge (F), wie auch in entgegengesetzter Richtung zum Entspannen der Felge (F) wirksam ist.

2. Vorrichtung nach Anspruch 1,
**dadurch gekennzeichnet,**
**dass** das Zylinder/Kolben-Aggregat (10) über zumindest ein Axiallager (11) auf den Spannkörper (6) einwirkt.

3. Vorrichtung nach Anspruch 1,
**dadurch gekennzeichnet,**
**dass** das Zylinder/Kolben-Aggregat (10) über nur ein Axiallager (11) auf den Spannkörper (6) einwirkt.

4. Vorrichtung nach Anspruch 2 oder 3,
**dadurch gekennzeichnet,**
**dass** in gespanntem Zustand ein mit der Spannvorrichtung drehbarer Lagerring (11a) des Axiallagers (11) keine Berührung mit nicht rotierenden Teilen der Spannvorrichtung aufweist und dass der gegenüberliegende Lagerring (11b) des Lagers (11) keine Berührung mit den sich drehenden Teilen der Spannvorrichtung aufweist.

5. Vorrichtung nach Anspruch 2 oder 3,
**dadurch gekennzeichnet,**
**dass** in gespanntem Zustand der dem Zylinder/Kolben-Aggregat (10) zugewandte Lagerring (11a) des Axiallagers (11) einen geringen Luftspalt (L₁) in Axialrichtung gegenüber dem Zylinder/Kolben-Aggregat aufweist.

6. Vorrichtung nach Anspruch 2 oder 3
**dadurch gekennzeichnet,**
**dass** der dem Zylinder/Kolben-Aggregat (10) abgewandte Lagerring (11 b) des Axiallagers (11) ohne Kontakt mit drehbaren Teilen der Spannvorrichtung ausgebildet ist.

7. Vorrichtung nach Anspruch 1,
**dadurch gekennzeichnet,**
**dass** das Zylinder/Kolben-Aggregat (10) mittels einer Lagerkombination (20) ortsfest auf einer Hohlwelle (1) gelagert ist.

8. Vorrichtung nach Anspruch 1,
**dadurch gekennzeichnet,**
**dass** das Zylinder/Kolben-Aggregat (10) über seinen Kolben (10b) auf den Spannkörper (6) einwirkt.

9. Vorrichtung nach Anspruch 1,
**dadurch gekennzeichnet,**
**dass** das Zylinder/Kolben-Aggregat (10) zwei Pneumatik-Anschlüsse (15a, 15b) beidseits des Kolbens (10b) aufweist.

10. Vorrichtung nach Anspruch 9,
**dadurch gekennzeichnet,**
**dass** der Kolben (10b) über ein Axiallager (11) und eine Stange (2) auf den Spannkörper (6) einwirkt.

11. Vorrichtung nach Anspruch 10,
**dadurch gekennzeichnet,**
**dass** die Stange (2) mittels ausschwenkbarer Kupplungsklauen (7) in zumindest axial formschlüssigen Eingriff mit dem Spannkörper (6) gelangt.
